# EUROPÄISCHE PATENTSCHRIFT

(11) **EP 2 462 371 B1**
(45) Veröffentlichungstag und Bekanntmachung des Hinweises auf die Patenterteilung: **10.07.2013**
(21) Anmeldenummer: 10745148.6
(22) Anmeldetag: 05.08.2010
(51) Int. Cl.: F16L 11/12, F16L 53/00

(54) **BEHEIZBARES SCHLAUCHSYSTEM**
HEATED TUBE SYSTEM
SYSTÈME DE TUYAU CHAUFFANT

(30) Priorität: 05.08.2009 DE 202009010595 U
(43) Veröffentlichungstag der Anmeldung: 13.06.2012
(73) Patentinhaber: Eugen Forschner GmbH, 784549 Spaichingen (DE)
(72) Erfinder: CHALOUPKA, Thomas, 78549 Spaichingen (DE); PUSKAS, Ludwig, 78549 Spaichingen (DE)
(74) Vertreter: Wiese, Gerhard
(86) Internationale Anmeldenummer: PCT/EP2010/004811
(87) Internationale Veröffentlichungsnummer: WO 2011/015362

(56) Entgegenhaltungen:
- WO-A1-2007/073286
- WO-A1-2009/048470
- DE-U1-202008 013 047
- FR-A1- 2 874 075

## Beschreibung

Die Erfindung betrifft ein beheizbares Schlauchsystem gemäß dem Oberbegriff des Anspruchs 1.

Ein solches Schlauchsystem is aus DE 20 2008 013407 U bekannt.

Zurzeit befinden sich mehrere heizbare Schlauchvarianten - wie beispielsweise im Patent EP 0 142 624 B1 beschrieben - im Serieneinsatz. All diese Schläuche haben das gemeinsame Merkmal, dass die Heizleiter ebenso wie Gewebeverstärkungen in den Schlauch einvulkanisiert sind. Mit Einführung verschärfter Schadstoffnormen für Nutzfahrzeuge und Personenkraftwagen findet die Abgasnachbehandlung mittels Harnstoffeinspritzung eine immer größere Verbreitung. Beheizbare Schläuche mit dem eingangs beschriebenen Aufbau werden somit erstmalig in industriellen Stückzahlen eingesetzt. Die am Markt befindlichen Schlauchsysteme müssen den verschärften Anforderungen der Automobilindustrie entsprechen. Dabei haben sich bei den am Markt bekannten Schlauchsystemen folgende Probleme offenbart. Die Anforderungen des Normenentwurfs zur Euro 6 EU- Norm fordern erstmalig definierte Aufheizzeiten für das Medium AdBlue®. Dem gegenüber steht die Forderung der Fahrzeughersteller nach einer möglichst großen Effizienz des Heizschlauches zur Verringerung des elektrischen Leistungsbedarfes. Des Weiteren wird zunehmend zur Verringerung des cw-Wertes von Fahrzeugen deren gesamter Unterbodenbereich verkleidet. Dies führt im Bereich des Motors und der Abgasanlage zu einer deutlich erhöhten thermischen Belastung der angrenzenden Bauteile.

Im Recycling-Prozess ist das Herauslösen der einvulkanisierten Heizleiter mit den aktuell bekannten Fertigungstechnologien zu kostenintensiv und wenig prozesssicher.

Bei Schläuchen mit einvulkanisiertem Heizleiter wurde bei thermischen Untersuchungen das Problem sichtbar, dass durch die in Folge des Vulkanisierens entstehende thermische Kopplung des Heizleiters mit dem Schlauchmaterial ein hoher Wärmeverlust entsteht. Dem versucht man zurzeit in der Praxis zu begegnen, in dem ein zusätzlicher Schlauch aus Silikon oder Elastomergemischen über den beheizten Schlauch geschoben wird. Insbesondere in Nutzfahrzeugen finden sehr lange Schlauchelemente Verwendung. Sowohl bei der Transportverpackung wie auch bei der Verlegung der Schlauchelemente in den Fahrzeugen, insbesondere im Achsbereich, entstehen zwangsläufig Biegeradien. Dies führt bei vorstehend beschriebenem Schlauchaufbau zu Längendifferenzen zwischen dem Heizschlauch und dem umgebenden Isolationsmantel. Die Isolationswirkung ist in Folge dessen an den Schlauchenden nicht mehr gegeben. Des Weiteren wurde bei der Prüfung von Schläuchen mit einvulkanisierten Heizleitern festgestellt, dass beim Prozess des Vulkanisierens durch die Prozessbedingten Faktoren Temperatur und Druck die Isolation der Heizleiter verformt und in ihrer Stabilität geschädigt wird (Versprödung). Dies führt in der Konsequenz zur Undichtigkeit des Heizleiters gegenüber diffundierenden Medien.

Es ist Aufgabe der Erfindung, ein beheizbares Schlauchsystem zu schaffen, dass auch bei engen Biegeradien zuverlässig den Anforderungen des Normenentwurfs zur Euro 6 EU- Norm entspricht.

Diese Anforderungen werden gemäß der vorliegenden Erfindung durch die Merkmale des Anspruchs 1 gelöst. Dabei ist der Heizleiter separat ausgebildet und dadurch später im Recycling-Prozess wieder leicht von den anderen Bestandteilen des beheizbaren Schlauchsystems zu trennen. Die den Heizleiter umgebende separate Außenschicht weist eine gute thermische Isolationswirkung auf.

Vorteilhafte Ausgestaltungen der Erfindung sind in den Unteransprüchen angegeben.

Die Wandung des inneren, Fluid führenden Schlauchteils besteht bevorzugt aus Gummi oder einem Gummi ähnlichen Kunststoff, wie beispielsweise NBR oder aus einem Polyamid-basierten Kunststoff. In die Wandung des inneren Schlauchteils ist bevorzugt ein Verstärkungsgewebe integriert. Eine besonders bevorzugte Ausführungsform sieht ein inneres Schlauchteil vor, das aus zwei Lagen von Polyamid mit einem dazwischen angeordneten Verstärkungsgewebe, beispielsweise aus einem textilen Polyestergewebe oder aus Kevlar®, besteht. Ein derartiger doppelwandiger Aufbau des inneren Schlauchteils ist sehr gut für die Aufnahme von Druckspitzen geeignet.

Der Heizleiter ist bevorzugt in Form einer Wendel ausgebildet und besteht bevorzugt aus einem Widerstandsdraht. Der Heizleiter kann gemäß einer vorteilhaften Variante auch von einem Stützgewebe umgeben oder in ein Stützgewebe integriert sein, das zwischen dem Außenmantel des inneren Schlauchteils und der Außenschicht angeordnet ist. Das Stützgewebe ist beispielsweise aus PVC hergestellt.

Gemäß einer vorteilhaften Ausführungsform ist die separate Außenschicht durch eine Umwebung aus einem technischen Garn gebildet. Das technische Garn wird bevorzugt von einer Glasfaser gebildet. Neben der guten Isolationswirkung zeichnet sich dieses Material dadurch aus, dass es nicht brennbar ist.

Ein weiterer Bestandteil des erfindungsgemäßen beheizbaren Schlauchsystems wird von einem die Außenschicht umgebenden Wellrohr gebildet, mit dem die Isolationswirkung nach außen noch weiter verbessert werden kann. Dadurch kann die in den Heizleiter eingespeiste Heizleistung deutlich verringert werden. Darüber hinaus stellt das Wellrohr auch einen zusätzlichen Schutz vor Beschädigungen dar. Je nach thermischer Beanspruchung wir das Wellrohr bevorzugt aus Polyamid (PA) oder aus modifiziertem Polypropylen (PPmod) hergestellt (letzteres im Falle einer höheren thermischen Belastung im Bereich von -40°C bis +135°C).

Eine weitere Reduzierung der Heizleistung wird dadurch erreicht, dass in das Schlauchsystem wenigstens ein Temperatursensor integriert ist, mittels dem die Schlauchtemperatur in dem jeweiligen Schlauchsystem-Abschnitt gemessen und mittels eines Steuergeräts die Heizleistung für den betreffenden Schlauchsystem-Abschnitt geregelt werden kann.

Der wenigstens eine Temperatursensor bzw. die mehreren Temperatursensoren sind entweder auf der Außenschicht oder zwischen der Außenschicht und dem Wellrohr angeordnet oder alternativ dazu in die Außenschicht aus technischem Garn oder in das darunter angeordnete Stützgewebe eingewebt. Als weitere Alternative ist auch eine Integration des Temperatursensors bzw. der Temperatursensoren in die Wandung des inneren Schlauchteils bzw. in das dort angeordnete Verstärkungsgewebe möglich. Erfindungsgemäß ist jedoch eine Anordnung zwischen der Außenschicht und dem Wellrorhr vorgeschen, da dort die Außentemperatur relativ unverfälscht gemessen werden kann und die Regelung der Heizleistung des Schlauchsystems bevorzugt nach der Außentemperatur in einem Außentemperaturbereich von unter -5°C bis zu etwa + 5°C erfolgt.

Auch das Steuergerät zur Steuerung der an den Heizleiter angelegten Heizleistung kann in einer bevorzugten Variante in das Schlauchsystem integriert sein. Beispielsweise kann das Steuergerät zwischen der Außenschicht und dem Wellrohr angeordnet sein. Für den Fahrzeughersteller ergibt sich dadurch der Vorteil, dass das gesamte Schlauchsystem einschließlich seiner Sensorik und seiner Heizleistungssteuerung als in sich autarkes, "intelligentes" System nur über einen einzigen Stecker mit einer Bordspannungsquelle verbunden werden muss. Dabei kann ein einziges Steuergerät durch eine entsprechende Schnittstelle im Stecker bevorzugt auch die Signale der Temperatursensoren in benachbarten Schlauchsystem-Abschnitten erfassen und deren Heizleistung entsprechend regeln. Eine Integration des Steuergeräts in das Schlauchsystem wird aber erst mit entsprechend hohen Stückzahlen des beheizbaren Schlauchsystems wirtschaftlich sinnvoll. Alternativ dazu ist natürlich auch eine externe Anordnung des Steuergeräts außerhalb des Schlauchsystems möglich und bei kleineren Stückzahlen auch bevorzugt. In diesem Falle erfolgt die Kontaktierung des Steuergeräts mit dem Schlauchsystem-Abschnitt mittels des Steckers.

Das erfindungsgemäße Schlauchsystem wird bevorzugt für alle Harnstoff bzw. AdBlue® führenden Leitungen eines Kraftfahrzeuges oder eines stationären Dieselaggregats (z.B. für ein Blockheizkraftwerk oder für einen Stromversorgungscontainer) zwischen Tank, Pumpen und den Dosiermodulen eingesetzt.

Nachfolgend werden ein Ausführungsbeispiele eines erfindungsgemäßen beheizbaren Schlauchsystems unter Bezugnahme auf die Zeichnungen näher erläutert. Es zeigt:
- Fig. 1: einen schematischen Längsschnitt durch einen beheizbares Schlauchsystem gemäß der Erfindung;
- Fig. 2: einen schematischen Querschnitt durch das Schlauchsystem gemäß Fig. 1;
- Fig.3: eine schematische Darstellung des zum Schlauchsystem gehörenden Temperaturerfassungs- und Heizleistungsregelsystems, und
- Fig. 4 a-c: schematische Darstellungen verschiedenen Heizleiteranordnungen und -schaltungen.

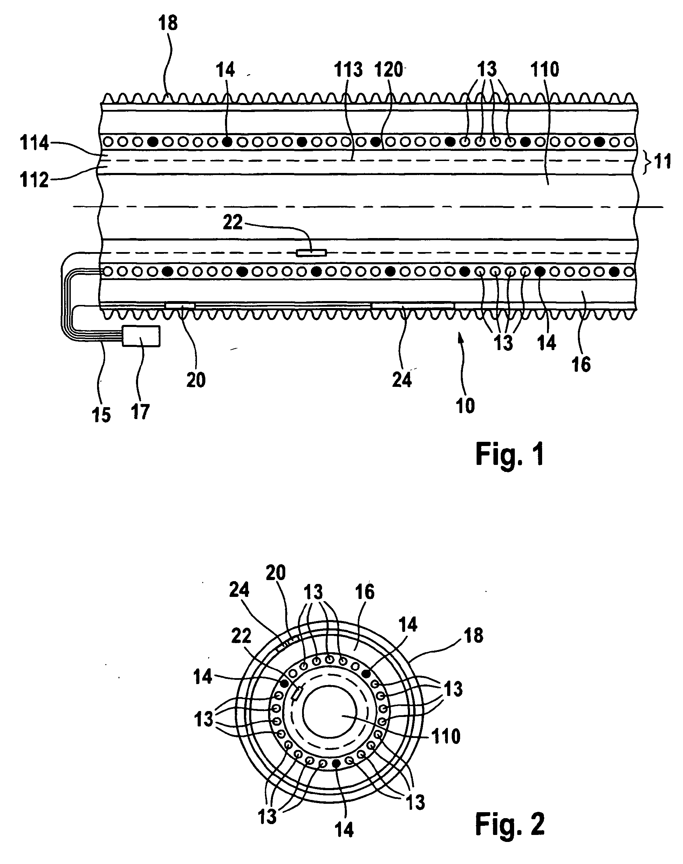

Das in Figur 1 schematisch dargestellte beheizbare Schlauchsystem 10 wird gebildet von einem inneren Schlauchteil 11, das mit seiner Innenwand einen Fluid führenden Kanal 110 begrenzt. Die Wandung des inneren Schlauchteils 11 wird gemäß einer ersten Alternative bevorzugt von einem Gummi (Naturkautschuk (NR)) oder einem Gummi ähnlichen Kunststoff, wie beispielsweise Ethylen-Propylen-Dien-Kautschuk (EPDM), Ethylen-Acrylat-Kautschuk (EAM), Fluorkarbon-Kautschuk (FKM), Acrylat-Kautschuk (ACM), Acrylnitril-Butadien-Kautschuk (NBR), Hydriertem Nitril-Kautschuk (HNBR), Carboxylat-Nitril-Kautschuk (XHNBR), Ethyl-Vinyl-Acetat (EVA), Chlorsulfonyl-Polyäthylen-Kautschuk (CSM), Silikon-Kautschuk (VMQ, MVQ), Fluor-Silikon-Kautschuk (FVMQ, MFQ), Chlorhydrin-Kautschuk (CO), Epichlorhydrin-Kautschuk (ECO), Polychlorpren-Kautschuk (CR), einkomponentigem Polyurethan (PU) oder einer Kombination oder einem Verschnitt der vorstehend genannten Stoffe, gebildet. Gemäß einer weiteren Alternative wird die Wandung aus einem Diffusionssicheren, insbesondere Polyamid basierten Kunststoff gebildet. In der besonders bevorzugten, in Fig. 1 dargestellten Ausführungsform weist das innere Schlauchteil 11 einen doppelwandigen Aufbau aus einer inneren Lage 112 aus Polyamid und einer äußeren Lage 114 aus Polyamid mit einem zwischen diesen beiden Lagen 112, 114 angeordneten Verstärkungsgewebe 113 auf.

Das Verstärkungsgewebe 13 besteht bevorzugt aus einem textilen Material, aus Kunststofffasern - wie beispielsweise aus Polyesterfasern oder Kevlar® - oder aus Carbonfasern.

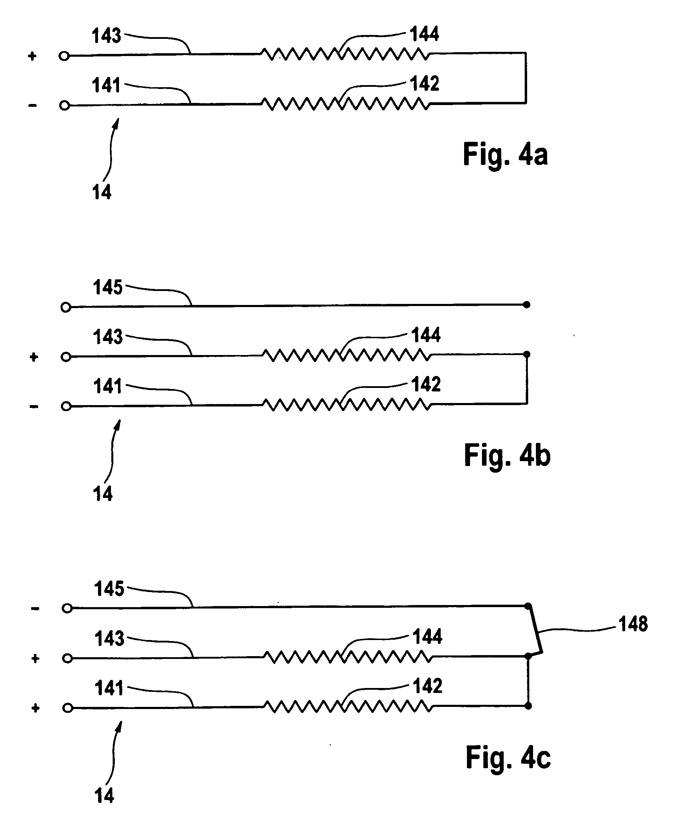

Auf dem Außenmantel 120 des inneren Schlauchteils 11 sitzt wenigstens ein bevorzugt wendelförmig ausgebildeter Heizleiter 14, der beispielsweise bei der Herstellung des beheizbaren Schlauchsystems 10 auf den Außenmantel 120 des inneren Schlauchteils 11 aufgeschoben wird. Der Heizleiter 14 besteht beispielsweise aus einem Widerstandsdraht, dessen Widerstand je Meter Länge je nach maximalem Heizbedarf festgelegt wird. Auch durch eine unterschiedliche Verschaltung mehrerer Heizleiter 14 kann die Wärmeleistung in einem Schlauchsystem-Abschnitt variiert werden, Näheres ist im Zusammenhang mit den Fign. 4a - c weiter unten erläutert.

Der oder die Heizleiter 14 werden außen von einem Stützgewebe 13 eng umgeben, das bevorzugt aus Polyvinylchlorid (PVC) hergestellt ist und den oder die Heizleiter 14 auf dem inneren Schlauchteil 11 fixiert. In einer besonders bevorzugten Variante gemäß Fig. 2 können die Heizleiter 14 auch in das Stützgewebe 13 mit eingewebt sein.

Der Heizleiter 14 bzw. die Stützgewebeschicht 13 werden ihrerseits außen von einer thermisch isolierenden Außenschicht 16 umgeben. Die Außenschicht 16 wird bevorzugt von einem technischen Garn, besonders bevorzugt von Glasfasern, gebildet. Das Aufbringen der Außenschicht 16 erfolgt bevorzugt durch Umweben des inneren Schlauchteils 11 mit dem auf dessen Außenmantel 120 aufgebrachten Heizleiter 14 und der den Heizleiter 14 fixierenden Stützgewebeschicht 13 mittels des auf Spindeln angeordneten technischen Garns.

Die Außenschicht 16 ist ihrerseits von einem Wellrohr 18 umgeben, welches die äußere Begrenzung des Schlauchsystems 10 bildet. Im Zwischenraum zwischen dem Wellrohr 18 und der Außenschicht 16 ist wenigstens ein Temperatursensor 20 angeordnet, der die Außentemperatur im Bereich des jeweiligen Schlauchsystem-Abschnitts 10 misst und an ein Steuergerät 24 überträgt, das optional ebenfalls im Zwischenraum zwischen dem Wellrohr 18 und der Außenschicht 16 angeordnet ist. Ergänzend oder alternativ zum Temperatursensor 20 ist ein Temperaturfühler 22 in das innere Schlauchteil 11, beispielsweise in das Verstärkungsgewebe 113 integriert. Des Weiteren ist auch eine Anordnung eines Temperatursensors auf dem Außenmantel 120 des inneren Schlauchteils 11 unterhalb der Außenschicht 16 möglich. Die Temperatursensoren 20 bzw. 22 erlauben bei einer weiter innen liegenden Anordnung einen Rückschluss auf die Temperatur des Fluids im Kanal 110 und dienen dann als Eingangsgröße für eine Regelung der an die Heizleiter 14 angelegten Heizleistung mittels des Steuergeräts 24. Bevorzugt ist jedoch eine einfache Regelung nach der außen am jeweiligen Schlauchsystem-Abschnitt 10 gemessenen Umgebungs- bzw. Außentemperatur. Liegt diese bei oder unter -5°C werden der oder die Heizleiter 14 mit einem Heizstrom beaufschlagt, während die Heizung bei Temperaturen von +5°C oder darüber eingestellt wird. Durch ein beispielsweise mit Pulsweitenmodulation getaktetes Anlegen einer Heizspannung an den oder die Heizleiter kann die Heizleistung beispielsweise bei Temperaturen von größer als -15°C auf etwa 25% der maximalen Heizleistung reduziert werden, während sie bei Temperaturen von weniger als -15°C auf etwa 50% der maximalen Heizleistung und bei Temperaturen von weniger als -30°C auf 100% der maximalen Heizleistung erhöht wird.

An einem Ende des beheizbaren Schlauchsystems 10 sind bevorzugt, wie in Figur 1 auf der linken Seite angedeutet, zwischen dem Außenmantel 120 des inneren Schlauchteils 11 und der Außenschicht 16 nach außen isolierte, elektrisch leitende Litzen 15, insbesondere aus Kupfer, angeordnet. Die Litzen 15 dienen mit ihrem innen liegenden Ende der Kontaktierung der Heizleiter 14. Sie sind mit ihrem äußeren Ende aus dem beheizbaren Schlauchsystem 10 herausgeführt und am Ende mit einem Stecker 17 versehen. Über den Stecker 17 erfolgt die Kontaktierung der Heizleiter 14 mit einer Spannungsquelle, insbesondere mit einer Bordspannungsquelle 26 eines Fahrzeugs. Die Stecker 17 dienen bei der Ausführungsform mit einer geregelten Heizleistung auch der Herstellung der Signalverbindung der Temperatursensoren 20 bzw. 22 und der Verbindung der Spannungsquelle 26 und der Heizleiter 14 zum Steuergerät 24.

Durch den zweilagigen Aufbau des beheizbaren Schlauchsystems 10 aus dem inneren Schlauchteil 11 und der Außenschicht 16 können die Materialien so gewählt werden, dass das innere Schlauchteil 11 gut Wärme leitend ist, während die Außenschicht 16 eine gute thermische Isolation ermöglicht. Hierdurch wird eine effiziente Energienutzung beim Beheizen des Fluids erreicht. Für den Recycling-Prozess lässt sich der eine separate Zwischenschicht zwischen dem inneren Schlauchteil 11 und Außenschicht 16 bildende wendelförmige Heizleiter 14 relativ leicht von den übrigen Kunststoff-beziehungsweise Kautschuk-Materialien entfernen. Dadurch ist zu den positiven Eigenschaften eines prozesssicheren, dauerhaft dichten, Energie-effizienten, auch für enge Biegeradien geeigneten beheizbaren Schlauchs 10 auch eine erhöhte Umweltfreundlichkeit gegeben.

Durch die in das Schlauchsystem 10 integrierten Temperatursensoren 20, 22 und das optional ebenfalls integrierte Steuergerät 24 entsteht ein "intelligentes" Schlauchsystem, mittels dem ohne einen Rückgriff auf übrige Fahrzeugkomponenten nach Ankopplung an eine Spannungsquelle 26 für jeden Schlauchsystem-Abschnitt oder für eine Serie von miteinander gekoppelten Schlauchsystem-Abschnitten angepasst an die durch Witterung und Umgebung beeinflusste IST-Temperatur und unter Berücksichtigung der SOLL-Temperatur des im Kanal 110 geführten Fluids völlig autark die jeweils erforderliche Heizleistung bereit gestellt werden kann. Für Harnstoff (AdBlue®) als im Kanal 110 geführtes Medium beträgt die Solltemperatur beispielsweise 30°C und sollte als untere Grenze -8°C nicht unterschreiten und als obere Grenze +60°C nicht überschreiten. Das erfindungsgemäße Schlauchsystem 10 gewährleistet, dass der gewünschte Temperaturbereich Energie sparend eingehalten wird. Die Drücke im Kanal 110 liegen in diesem Fall bei bis zu etwa 15 bar.

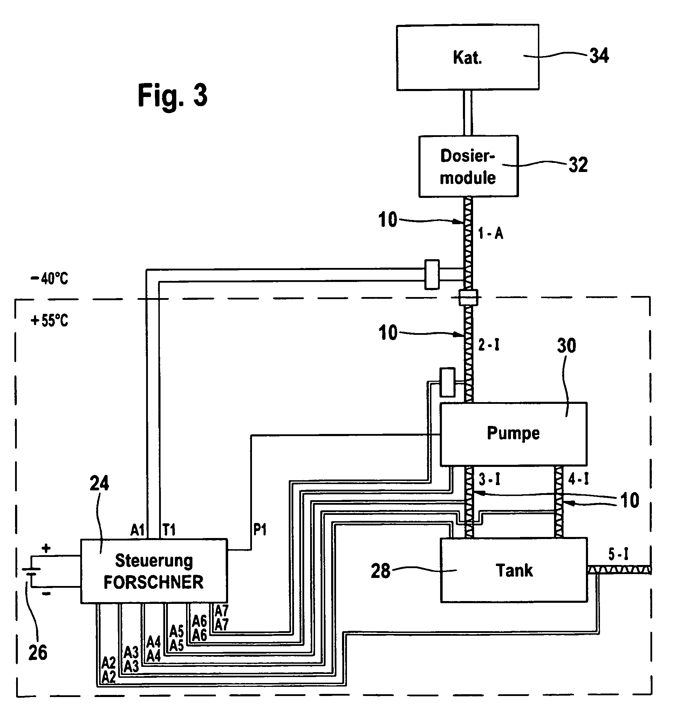

In dem in Fig. 3 dargestellten Schema für eine Harnstoff (AdBlue®)-Einspritzanlage eines stationären Dieselaggregats (beispielsweise ein Stromversorgungscontainer für abseits der Zivilisation gelegene Baustellen oder Behausungen) wird das Harnstoff-Wassergemisch von einem Tank 28 mittels einer Pumpe 30 zu Dosiermodulen 32 gefördert, die ihrerseits einem Diesel-Katalysator 34 eines Fahrzeugs das Harnstoff-Wassergemisch in der erforderlichen Menge zuführen. Die zwischen dem Tank 28 und der Pumpe 30 befindlichen Ansaug- und Rücklaufleitungen sowie die von der Pumpe 30 zu den Dosiermodulen führende Förderleitung sind jeweils als beheizbares Schlauchsystem 10 entsprechend der vorstehend beschriebenen Erfindung ausgeführt. Das schematisch dargestellte Steuergerät 24 ist mit einer Bordspannungsquelle 26 verbunden. Dem Steuergerät 24 werden als Eingangssignale die von den Temperatursensoren 20, 22 ermittelten Temperaturwerte zugeführt. Das Steuergerät ist ausgangsseitig mit der Pumpe 30 und mit den Heizleitern 14 der verschiedenen Schlauchsystem-Abschnitte 10 verbunden und steuert deren Leistung verlustarm bevorzugt getaktet durch Pulsweitenmodulation (PWM). Der Sollwert für die Temperatur der Schlauchsystem-Abschnitte 10 ist in einem Speicher des Steuergeräts hinterlegt, sodass das Steuergerät 24 durch einen SOLL-/IST-Wertvergleich die entsprechende an die Heizleiter 14 anzulegende elektrische Heizleistung berechnen kann.

Im einfacheren Fall erfolgt die Regelung jedoch nach der Außentemperatur, wie schon weiter oben beschrieben.

In den Fign. 4a-c sind mehrere Möglichkeiten einer vorteilhaften Verschaltung der Heizleiter 14 gezeigt, die nachfolgend kurz beschrieben werden.

In Fig. 4a sind zwei Heizleiter 14, die jeweils über einen von einer Kupferlitze gebildeten Leitungsbereich 141 bzw. 143 und die jeweils einen von einem Widerstandsdraht gebildeten Heizbereich 142 bzw. 144 aufweisen in Reihenschaltung miteinander verbunden. Damit wird ein hoher Widerstand und eine entsprechend hohe Heizleistung bewirkt.

Bei längeren beheizbaren Schlauchsystemen 10 kann es sinnvoll sein, über die gesamte Länge zumindest eine weitere Kupferlitze 145 im Schlauchsystem 10 zunächst unbenutzt mit zu verlegen (Fig. 4b).

Im Bedarfsfall kann mittels dieser weiteren Kupferlitze 145 bevorzugt durch Einfügen einer Steckbrücke 148 (Fig. 4c) die Schaltung in eine Parallelschaltung umgeschaltet werden, wodurch sich der Widerstand und die aufgenommene Leistung halbieren.

**Bezugszeichenliste**

| | | | |
|---|---|---|---|
| 10 | Beheizbares Schlauchsystem | 32 | Dosiermodul |
| 11 | inneres Schlauchteil | 34 | Katalysator |
| 110 | (Fluid führender) Kanal | | |
| 112 | innere Lage (von 11) | | |
| 113 | Verstärkungsgewebe (von 11) | | |
| 114 | äußere Lage (von 11) | | |
| 120 | Außenmantel (von 11) | | |
| 13 | Stützgewebe | | |
| 14 | Heizleiter | | |
| 141, 143 | Leitungsbereiche (von 14) | | |
| 142, 144 | Heizbereiche (von 14) | | |
| 145 | (zusätzliche) Leitung | | |
| 148 | Steckbrücke | | |
| 15 | Litze | | |
| 16 | Außenschicht | | |
| 17 | Stecker | | |
| 18 | Wellrohr | | |
| 20 | Temperatursensor | | |
| 22 | Temperatursensor | | |
| 24 | Steuergerät | | |
| 26 | (Bord-)Spannungsquelle | | |
| 28 | Tank | | |
| 30 | Pumpe | | |

## Patentansprüche

1. Beheizbares Schlauchsystem (10) mit einem Fluid führenden inneren Schlauchteil (11), dessen Wandung (112, 114) von einem elektrischen Heizleiter (14) beheizbar ist,
**wobei**
- der elektrische Heizleiter (14) separat ausgebildet ist und die äußere Wandung (114) des inneren Schlauchteils (11) umgibt,
- der elektrische Heizleiter (14) mittels einer separaten, den Heizleiter (14) fest umgebenden Außenschicht (16) nach außen Wärmeisoliert ist, **dadurch gekennzeichnet, dass**
- die Außenschicht (16) von einem Wellrohr (18) umgeben ist, und wenigstens ein Temperatursensor (20) zwischen der Außenschicht (16) und dem Wellrohr (18) angeordnet ist.

2. Beheizbares Schlauchsystem (10) nach Anspruch 1, **dadurch gekennzeichnet, dass** die Wandung (112, 114) des inneren Schlauchteils (11) aus Gummi oder einem Gummi ähnlichen Kunststoff besteht.

3. Beheizbares Schlauchsystem (10) nach Anspruch 1, **dadurch gekennzeichnet, dass** die Wandung (112, 114) des inneren Schlauchteils (11) aus einem Polyamid-basierten Kunststoff besteht.

4. Beheizbares Schlauchsystem (10) nach wenigstens einem der vorhergehenden Ansprüche, **dadurch gekennzeichnet, dass** in der Wandung (112, 114) des inneren Schlauchteils (11) ein Verstärkungsgewebe (113) integriert ist.

5. Beheizbares Schlauchsystem (10) nach wenigstens einem der vorhergehenden Ansprüche, **dadurch gekennzeichnet, dass** der Heizleiter (14) in Form einer Wendel ausgebildet ist.

6. Beheizbares Schlauchsystem (10) nach wenigstens einem der vorhergehenden Ansprüche, **dadurch gekennzeichnet, dass** der Heizleiter (14) von einem Widerstandsdraht gebildet ist.

7. Beheizbares Schlauchsystem (10) nach wenigstens einem der vorhergehenden Ansprüche, **dadurch gekennzeichnet, dass** auf den äußeren Teil der Wandung (120) des inneren Schlauchteils (11) zumindest an einem Ende eine isolierte Litze (15) zur Kontaktierung des Heizleiters (14) aufgebracht ist.

8. Beheizbares Schlauchsystem (10) nach wenigstens einem der Ansprüche 1 bis 7, **dadurch gekennzeichnet, dass** die separate Außenschicht (16) durch eine Umwebung aus einem technischen Garn gebildet wird.

9. Beheizbares Schlauchsystem (10) nach Anspruch 8, **dadurch gekennzeichnet, dass** das technische Garn von einer Glasfaser gebildet wird.

10. Beheizbares Schlauchsystem (10) nach wenigstens einem der vorhergehenden Ansprüche, **dadurch gekennzeichnet, dass** zwischen dem inneren Schlauchteil (11) und der Außenschicht ein Stützgewebe (13) angeordnet ist.

11. Beheizbares Schlauchsystem (10) nach Anspruch 10, **dadurch gekennzeichnet, dass** der Heizleiter (14) in das Stützgewebe (13) integriert ist.

12. Beheizbares Schlauchsystem (10) nach einem der vorhergehenden Ansprüche, **dadurch gekennzeichnet, dass** der wenigstens eine Temperatursensor (20, 22) die Temperatur des Fluids erfasst und an ein Steuergerät (24) übermittelt, mittels dem die Leistung des elektrischen Heizleiters (14) regelbar ist.

13. Beheizbares Schlauchsystem (10) nach Anspruch 12, **dadurch gekennzeichnet, dass** das Steuergerät (24) zwischen der Außenschicht (16) und dem Wellrohr (18) angeordnet ist.

14. Beheizbares Schlauchsystem (10) nach wenigstens einem der vorhergehenden Ansprüche, **dadurch gekennzeichnet, dass** wenigstens zwei Heizleiter (14) entweder wahlweise elektrisch in Reihe geschaltet oder mittels wenigstens einer in das Schlauchsystem (10) integrierten zusätzlichen Leitung (145) und wenigstens einer Steckbrücke (148) in eine elektrische Parallelschaltung umgeschaltet werden können.

## Claims

1. Heated tube system (10) having a fluid-carrying inner tube part (11), of which the wall (112, 114) can be heated by an electric heating conductor (14),
**wherein**
- the electric heating conductor (14) is formed separately and surrounds the outer wall (114) of the inner tube part (11),
- the electric heating conductor (14) is thermally insulated with respect to the outside by means of a separate outer layer (16) fixedly surrounding the heating conductor (14),
**characterized in that**
- the outer layer (16) is surrounded by a corrugated pipe (18), and
- at least one temperature sensor (20) is arranged between the outer layer (16) and the corrugated pipe (18).

2. Heated tube system (10) according to Claim 1, **characterized in that** the wall (112, 114) of the inner tube part (11) consists of natural rubber or a plastic similar to natural rubber.

3. Heated tube system (10) according to Claim 1, **characterized in that** the wall (112, 114) of the inner tube part (11) consists of a polyamide-based plastic.

4. Heated tube system (10) according to at least one of the preceding claims, **characterized in that** a reinforcing fabric (113) is integrated in the wall (112, 114) of the inner tube part (11).

5. Heated tube system (10) according to at least one of the preceding claims, **characterized in that** the heating conductor (14) is constructed in the form of a spiral.

6. Heated tube system (10) according to at least one of the preceding claims, **characterized in that** the heating conductor (14) is formed from a resistance wire.

7. Heated tube system (10) according to at least one of the preceding claims, **characterized in that** an insulated stranded wire (15) for making contact with the heating conductor (14) is fitted to the outer part of the wall (120) of the inner tube part (11), at least at one end.

8. Heated tube system (10) according to at least one of Claims 1 to 7, **characterized in that** the separate outer layer (16) is formed by a surrounding woven layer made of a technical yarn.

9. Heated tube system (10) according to Claim 8, **characterized in that** the technical yarn is formed by a glass fibre.

10. Heated tube system (10) according to at least one of the preceding claims, **characterized in that** a supporting fabric (13) is arranged between the inner tube part (11) and the outer layer.

11. Heated tube system (10) according to Claim 10, **characterized in that** the heating conductor (14) is integrated into the supporting fabric (13).

12. Heated tube system (10) according to one of the preceding claims, **characterized in that** the at least one temperature sensor (20, 22) registers the temperature of the fluid and transmits it to a control device (24), by means of which the output of the electric heating conductor (14) can be regulated.

13. Heated tube system (10) according to Claim 12, **characterized in that** the control device (24) is arranged between the outer layer (16) and the corrugated pipe (18).

14. Heated tube system (10) according to at least one of the preceding claims, **characterized in that** at least two heating conductors (14) can either optionally be connected electrically in series or, by means of at least one additional conductor (145) integrated into the tube system (10) and at least one jumper plug (148), can be switched over into an electric parallel circuit.

## Revendications

1. Système de tuyau chauffant (10) comprenant une partie de tuyau interne (11) conduisant un fluide dont la paroi (112, 114) peut être chauffée par un conducteur chauffant électrique (14),
dans lequel
- le conducteur chauffant électrique (14) est configuré séparément et entoure la paroi externe (114) de la partie de tuyau interne (11),
- le conducteur chauffant électrique (14) est isolé thermiquement vers l'extérieur au moyen d'une couche externe (16) séparée qui entoure le conducteur chauffant (14) à demeure,
**caractérisé en ce que**
- la couche externe (16) est entourée par un tuyau ondulé (18) et
- au moins une sonde de température (20) est disposée entre la couche externe (16) et le tuyau ondulé (18).

2. Système de tuyau chauffant (10) selon la revendication 1, **caractérisé en ce que** la paroi (112, 114) de la partie de tuyau interne (11) se compose de caoutchouc ou d'une matière plastique similaire à du caoutchouc.

3. Système de tuyau chauffant (10) selon la revendication 1, **caractérisé en ce que** la paroi (112, 114) de la partie de tuyau interne (11) se compose de matière plastique à base de polyamide.

4. Système de tuyau chauffant (10) selon l'une des revendications précédentes, **caractérisé en ce qu'**un tissu de renforcement (113) est intégré dans la paroi (112, 114) de la partie de tuyau interne (11).

5. Système de tuyau chauffant (10) selon au moins l'une des revendications précédentes, **caractérisé en ce que** le conducteur chauffant (14) est réalisé sous la forme d'un filament spiralé.

6. Système de tuyau chauffant (10) selon au moins l'une des revendications précédentes, **caractérisé en ce que** le conducteur chauffant (14) est réalisé sous la forme d'un fil résistif.

7. Système de tuyau chauffant (10) selon au moins l'une des revendications précédentes, **caractérisé en ce qu'**un cordon isolé (15) destiné à établir le contact avec le conducteur chauffant (14) est monté sur au moins d'une partie externe de la paroi (120) de la partie de tuyau interne (11).

8. Système de tuyau chauffant (10) selon au moins l'une des revendications 1 à 7, **caractérisé en ce que** la couche externe séparée (16) est formée par un tissage périphérique d'un fil technique.

9. Système de tuyau chauffant (10) selon la revendication 8, **caractérisé en ce que** le fil technique est formé d'une fibre de verre.

10. Système de tuyau chauffant (10) selon au moins l'une des revendications précédentes, **caractérisé en ce qu'**un tissu de soutenir renforcer (13) est disposé entre la partie de tuyau interne (11) et la couche externe.

11. Système de tuyau chauffant (10) selon la revendication 10, **caractérisé en ce que** le conducteur chauffant (14) est intégré dans le tissu de soutenir renforcer (13).

12. Système de tuyau chauffant (10) selon l'une des revendications précédentes, **caractérisé en ce que** l'au moins une sonde de température (20, 22) capte la température du fluide et la communique à un contrôleur (24) au moyen duquel peut être régulée la puissance du conducteur chauffant électrique (14).

13. Système de tuyau chauffant (10) selon la revendication 12, **caractérisé en ce que** le contrôleur (24) est disposé entre la couche externe (16) et le tuyau ondulé (18).

14. Système de tuyau chauffant (10) selon au moins l'une des revendications précédentes, **caractérisé en ce qu'**au moins deux conducteurs chauffants (14) sont branchés soit au choix électriquement en série, soit peuvent être permutés en un circuit électrique parallèle au moyen d'au moins une ligne supplémentaire (145) intégrée dans le système de tuyau (10) et d'au moins un cavalier enfichable (148).
